Europäisches Patentamt

European Patent Office

Office européen des brevets

(19)

(11)  **EP 0 687 899 B1**

(12)  **EUROPEAN PATENT SPECIFICATION**

(45) Date of publication and mention
of the grant of the patent:
**11.10.2000  Bulletin 2000/41**

(51) Int Cl.[7]: **G01N 3/24**

(21) Application number: **95600003.8**

(22) Date of filing: **16.02.1995**

(54) **Specimen geometric configuration for uniform shear distribution during testing**

Probeform, um eine gleichmässige Verteilung der Scherkräfte während eines Tests zu erzeugen

Configuration géométrique d'échantillon pour obtenir une distribution uniforme de cisaillement pendant une épreuve

(84) Designated Contracting States:
**DE FR GB IT NL SE**

(30) Priority: **14.06.1994  GR 94100286**

(43) Date of publication of application:
**20.12.1995  Bulletin 1995/51**

(73) Proprietor: **INSTITUTO MICHANIKIS YLIKON KAI
GEODOMON A.E.
152 36 Penteli (Athens) (GR)**

(72) Inventor: **Michelis, Paul
GR-152 36 Penteli (GR)**

(56) References cited:
**EP-A- 0 452 216       EP-A- 0 504 012
CH-A- 486 020         FR-A- 2 688 590
US-A- 2 617 293       US-A- 4 916 954**

- **DATABASE WPI Section EI, Week 8742 Derwent Publications Ltd., London, GB; Class S03, AN 87-297758 & SU-A-1 298 598 ( GOSSTROI BUILDING) , 23 March 1987**
- **COMPOSITES, July 1980 pages 149-154, HERAKOVICH 'finite element stress analysis of a notched coupon specimen for in plane shear behaviour of composites'**
- **EXPERIMENTAL MECHANICS, vol. 30, no. 1, June 1990 pages 184-189, DADRAS 'anlytical and experimental evaluation of double notch shear specimens'**
- **DATABASE WPI 17 November 1982 Derwent Publications Ltd., London, GB; AN n2063 e40 & SU-A-888 001 (MIKHAILOV) , 17 December 1981**
- **PATENT ABSTRACTS OF JAPAN vol. 009 no. 257 (P-396) ,15 October 1985 & JP-A-60 105941 (KAGAKUGIJUTSUCHO KINZOKU ZAIRYO KENKYUSHO;OTHERS: 0J) 11 June 1985,**
- **DATABASE WPI Week 79 Derwent Publications Ltd., London, GB; AN g3236c29 & SU-A-700 809 (DUBROV) , 30 November 1979**
- **DATABASE WPI Section EI, Week 9137 Derwent Publications Ltd., London, GB; Class S03, AN 91-272755 & SU-A-1 619 112 ( AS MET SUPERPLASTIC) , 7 January 1991**

## Description

The present invention refers to the geometric configuration of a specimen (metallic, ceramic, composite or geo-material) that, when properly subjected to the action of pairs of loads, ensures the development of uniformly distributed shear stress-strain in the test section interior, even in the case of large material deformation. In addition, this invention refers to the development of a technique adapted to the proposed specific design, in order to heat the specimen to temperatures that may reach 1900° C during the shear tests. The major scientific and technical fields related directly with the invention include Mechanics of Materials. Technology and Strength of Metals, Alloys, Ceramics, Composites and Geo-materials and Material Testing Procedures.

Despite the fact that significant shear stresses may develop under realistic loading conditions in materials (with important effects on the design of structures), the efforts of acquiring proper design data (especially for composite materials) over the last decades have been encountered with severe difficulties concerning the determination of in-plane shear modulus and strength. The problem stems primarily from an inability to define a specimen geometry and loading configuration which will induce a state of uniform shear in the test section. Such a state is a necessary condition for the derivation of useful conclusions from the tests.

Indeed, there exists presently no generally accepted experimental technique for the measurement of in-plane shear response of materials and particularly sheet shaped materials. While many different test methods are currently available (e.g. off-axis tension test, Iosipescu shear test, Arcan shear test, rail-shear test etc.), the results obtained from these tests have often proved inconsistent. In addition, the volume of the specimen undergoing uniform shear is very limited and, therefore, the measured strength may not be representative of the material. Depending on the particular testing procedure, the variations in the reported values can be attributed to the state of shear stress in the test sections of the specimens, which is neither pure nor in most cases uniform. A method for configuring a sample is known from SU-A-888 001.

Referring to the two most common shear test methods for composites, i.e. the off-axis tension test and the Iosipescu shear test, previous studies have shown that consistent results can be obtained only on the basis of proper interpretation and after corrections that take into account the nonuniform test section stress distribution. In the case of the off-axis tension test, the end- constraint effect introduces an additional shear stress component at the clamped edge of the test coupon that must be included with the applied longitudinal stress in the transformation to the principal material coordinate system. When the Iosipescu shear specimen in considered, on the other hand, correction factors have been computed using finite element simulations for the nonuniform shear-stress distribution.

The situation worsens in the case of large specimen deformation under the shear loading. Furthermore, the modern technological needs for high temperature testing add to the difficulties encountered, as the demand for uniform temperature distribution in the test section must be taken into account.

The invention deals with the development of a specific geometric configuration of the specimen and a corresponding heating technique such that the above requirements are met. Specifically, following the examination of several geometries, the configuration shown in drawing 1 has been selected. The test section of interest, where the developing pure shear stresses are uniformly distributed, consists of a zone along the centerline of the specimen characterized by the semicircular groove on its surface. The shear stress is easily calculated from the applied boundary forces (without recourse to constitutive equations), assuming only specimen equilibrium (Drawing 1):

$$\tau_{xy} = \frac{L_1 \cdot \sigma_a - L_2 \cdot \sigma_b}{AB}.$$

This specific geometrical shape has been selected among others (elliptical etc.) after detailed 3-D finite element simulations of the stress field on suitable grids for cubic (Drawing 2) and sheet shaped (Drawing 3) specimens.

The same computational study revealed the optimal size and location of the regions on the specimens upper and lower boundaries where loading should be applied in order to achieve uniform shear conditions at the test section. Four pairs of paraller strip loads are applied in a way such that a uniform shear field is generated in the central region (Drawing 1: Y1 Y2 Y3 Y4). The distribution of the shear stress $\tau_{xy}$ is depicted in Drawing 4, while Drawing 5 shows the distribution of $\tau_{xy}$, $\sigma_x$, $\sigma_y$ from the specimen centre on the x, y plane. The sheet-shaped specimen, (usual case for composites) has dimensions typically of the order of 50x50x7 mm$^3$. In the case of cubic specimen, the size may reach 20 cm. This is a significant feature for geo-materials because it allows taking into account the tectonic discontinuities of the material during mechanical testing. It is furthermore possible to study the behaviour of cubic concrete specimens with small dimensions of aggregates.

Turning to the heating aspects, the proposed technique involves the use of an extra thin wire (resistance) that is carefully wound along the upper and lower grooves of the cubic or sheet shaped specimen. The heating element is a Cr-Ni wire 0.3 mm in diameter, which is covered by ceramic tape for better electrical insulation. The ceramic tape has been immersed in boron nitride to improve its thermal conductivity. The overall system (wire, ceramic tape) is finally covered by a boron nitride layer for better insulation from the ambient and more efficient fixing during temperature variation and load application.

The attained temperature uniformity depends essentially on the overall loading system design as this imposes the relevant boundary conditions. To avoid undesired overheating, cooling (by air or water circulation) should be applied on the loading system.

The experiments done to verify the functionality and durability of the heating system and the insulators and to measure the uniformity of temperature, took place by letting the system to reach steady state at temperatures of the order of 400°C and 800 °C for several hours. No particular operational problems were observed with the required power, while the temperature variation in the test section was of the order of 1%.

The specimen configuration as described above, with the loading and heating system, was used in a special device designed to apply the aforementioned pairs of loads and allowing observation of the specimen, with quite satisfactory results. More specifically, an adequately uniform distribution of shear stress-strain inside the test section was achieved, as shown by the comparison of the numerically calculated shear strain (under various stress states at twelve points near the centre of the specimen) with the measured strain using an optical system (drawing 6) and the recordings of a three-gage 45-deg rosette. All these independent methods resulted in good agreement of the data.

To summarise, the new geometric configuration of the specimen (cubic or sheet shaped) generates a three dimensional region (with a width of at least 5 mm) characterised by uniformly distributed shear stresses, a feature that improves the current state-of-the-art. The latter exhibits uniformity of stresses that is restricted to a two-dimensional zone of the material.

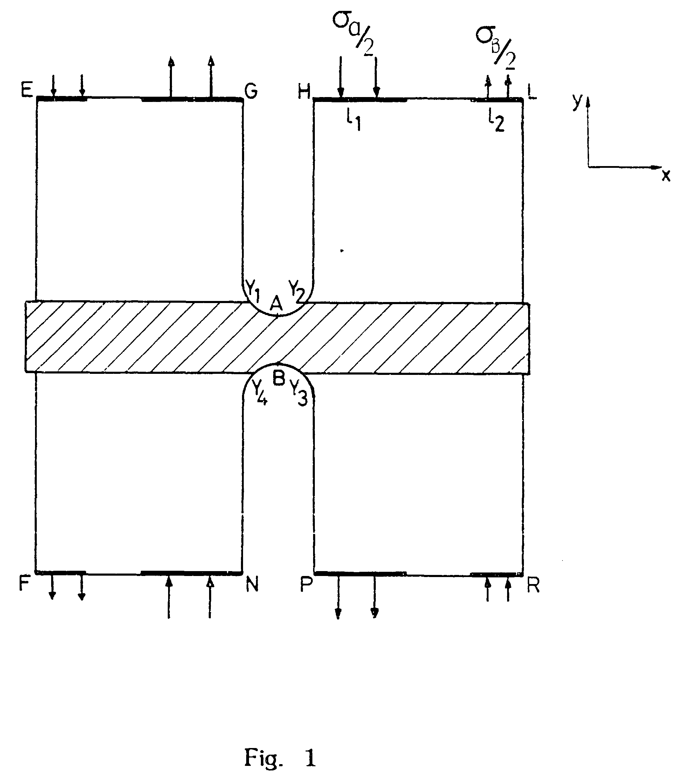

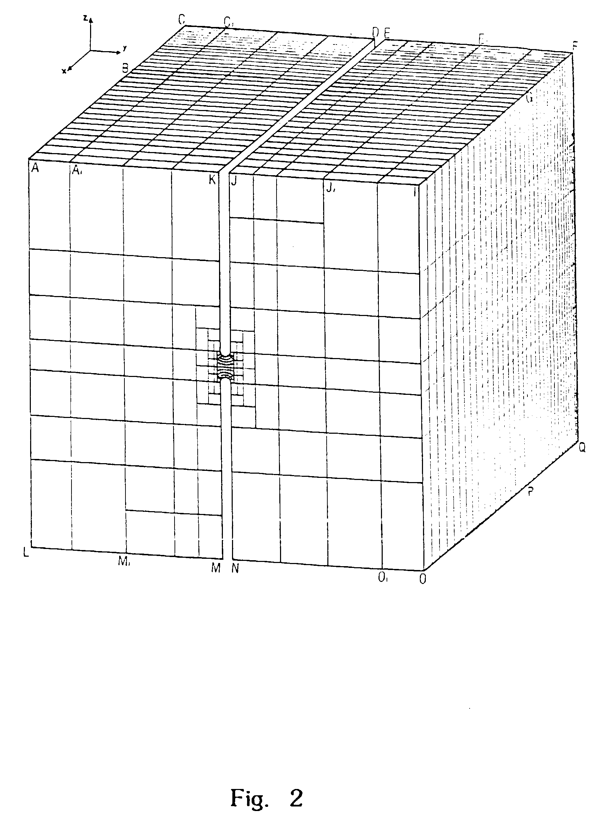

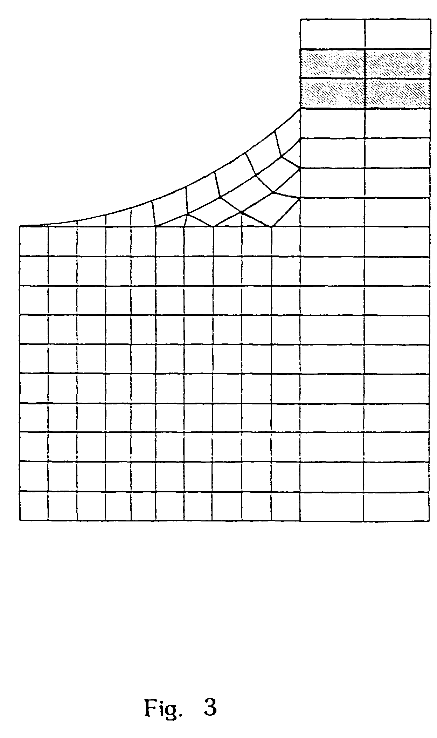

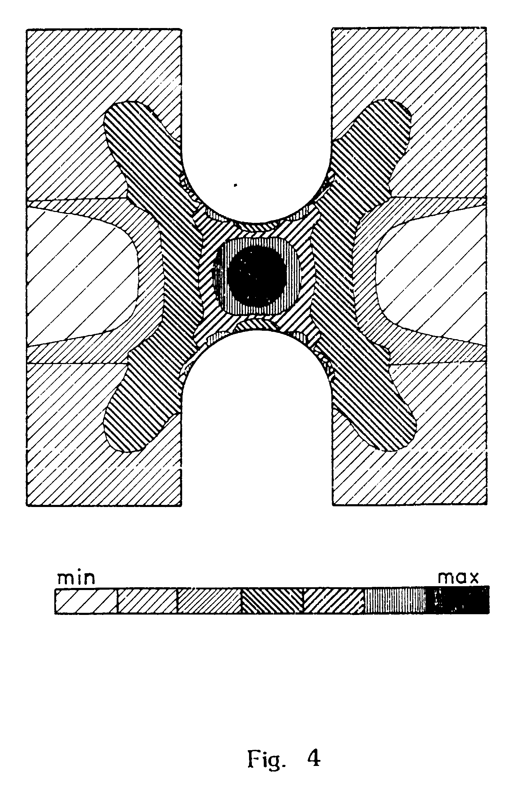

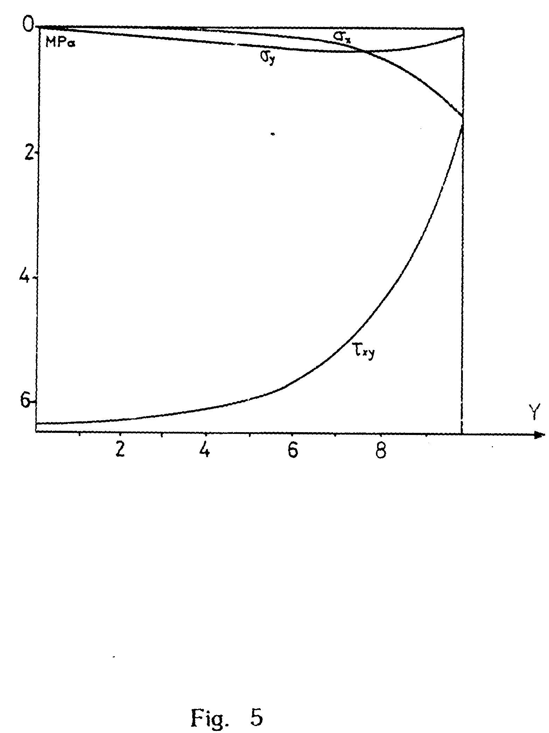

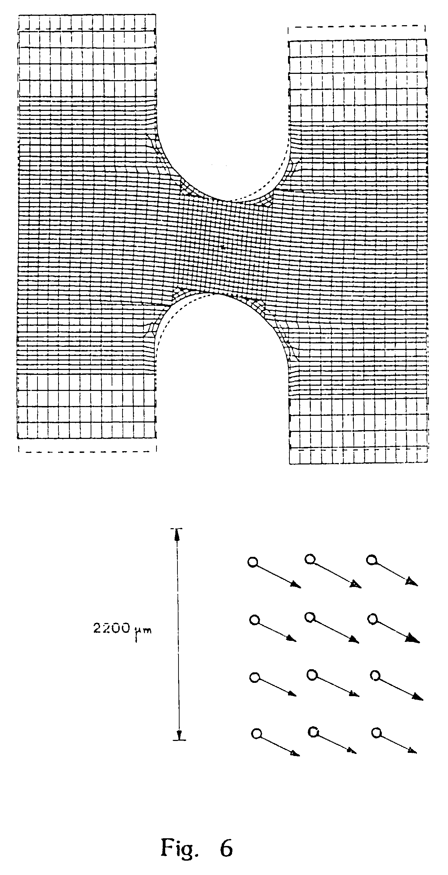

## Claims

1. A method of geometrically configuring a cubic or sheet shaped metallic, ceramic, composite or geo-material specimen, in order to achieve uniform shear stress-strain fields in its interior when subjected to shear loading, wherein two mutually opposite, symmetrical grooves extending along a centerline of the specimen body are formed and characterized in that the region of material left between them is only a few millimeters thick and in that the bottom of the grooves is semicircular, so that a uniform shear stress/strain field is attained in the central region (Y1, Y2, Y3, Y4) between said grooves of the specimen.

2. The method of claim 1 further comprising the step of heating the specially configured specimen by winding a thin heating wire, covered by ceramic tape, along the grooves of the specimen, said wire is covered further by a boron nitride layer for better insulation, fixation and contact with the specimen body.

## Patentansprüche

1. Die Methode geometrischer Konfiguration eines würfelähnlichen oder blechartigen Prüflings aus metallischen oder keramischen Stoffen oder aus Kompositen oder Geomaterialien, mit dem Ziel, bei Einwirkung von Scherbelastung uniforme Scher - (Zug-, Druck-) - Felder in seinem Inneren zu erzielen, wobei zwei entgegengesetzte symmetrische Einkerbungen längs der Prüflingsachse angebracht sind und die Eigenschaften aufweisen, dass das Restmaterial zwischen den Einkerbungen eine Dikke von nur wenigen Millimetern beträgt und dass die Bodenfläche der Einkerbungen halbkreisförmig gestaltet ist, damit ein uniformes Scher - (Zug - Druck -) - Belastungsfeld in der zentralen Region des Prüflings (Y1, Y2, Y3, Y4) zwischen besagten Einkerbungen erreicht ist.

2. Die Methode unter 1, erweitert durch den Schritt der Erhitzung des speziell konfigurierten Prüflings mit Hilfe der Windungen eines dünnen Heizungsdrahtes längs der Einkerbungen des Prüflings, gedeckt durch ein Keramikband ; dieser Draht ist zusätzlich mit einer Boron-Nitride Schicht bedeckt, womit bessere Isolation, Fixierung und Kontaktierung mit dem Prüflingskörper erreicht wird.

## Revendications

1. Une Méthode pour la configuration geometrique d' un spécimen metalique a forme cubique ou feuille, composite ou geo-materiel, en effet preservant un champ de tension-déformation de coupage uniforme a 1' intérieur, quant soumit a un charge de coupage, exerté par deux rainures symmetriques et mutuellement opposées, et prolongées le long de 1' axis centrale du corps du spécimen se sont formées et characterisées dans la région du matériel entre les rainures, est seulement quelques millimétres d'epaisseur et que le bas des rainures est demi-circulaire ansi qu' on réalise un champ de tension-déformation de coupage uniforme dans la région centrale (Y1, Y2, Y3, Y4) entre les rainures du specimen.

2. La méthode du paragraphe 1, de plus refèrme le pas de chaufage du spécimen qui est spécialement configureé en placeant une filament metelique mince, de chauffage autour du spécimen, couvérte par un ruban céramique, le long de rainures du spécimen. Le filament métallique en suite est couvérte par une couche de Nitride de Boron pour atteindre meilleure isolement et fixation et a la même temps être en contacte avec le corps du spécimen.

Fig. 1

Fig. 2

Fig. 3

min                                                    max

Fig. 4

Fig. 5

2200 μm

Fig. 6